# EUROPEAN PATENT SPECIFICATION

(11) **EP 4 383 419 B1**
(45) Date of publication and mention of the grant of the patent: **17.06.2026**
(21) Application number: 23843251.2
(22) Date of filing: 11.07.2023
(51) Int. Cl.: H01M 50/211, H01M 50/242, H01M 50/249, H01M 50/358, H01M 50/256

(54) **BATTERY PACK AND VEHICLE INCLUDING THE SAME**
BATTERIEPACK UND FAHRZEUG DAMIT
BLOC-BATTERIE ET VÉHICULE LE COMPRENANT

(30) Priority: 20.07.2022 KR 20220089867; 27.04.2023 KR 20230055787
(43) Date of publication of application: 12.06.2024
(73) Proprietor: LG Energy Solution, Ltd., Seoul 07335 (KR)
(72) Inventor: PARK, Jin-Yong, Daejeon 34122 (KR); KWON, Woo-Yong, Daejeon 34122 (KR); LEE, Myung-Woo, Daejeon 34122 (KR); KIM, Seung-Joon, Daejeon 34122 (KR); KIM, In-Soo, Daejeon 34122 (KR); CHUNG, Se-Yun, Daejeon 34122 (KR); CHI, Ho-June, Daejeon 34122 (KR)
(74) Representative: Plasseraud IP
(86) International application number: PCT/KR2023/009883
(87) International publication number: WO 2024/019400

(56) References cited:
- EP-A1- 4 002 570
- EP-A1- 4 203 156
- WO-A1-2018/190435
- WO-A1-2022/080908
- CN-A- 113 794 011
- CN-U- 216 597 893
- KR-A- 20130 120 386
- KR-A- 20160 148 398
- KR-A- 20170 010 531
- KR-A- 20220 098 588
- KR-B1- 101 679 982
- US-A1- 2017 331 089

## Description

### TECHNICAL FIELD

The present invention claims priority to Korean Patent Application Nos. 10-2022-0089867 and 10-2023-0055787, respectively filed on July 20, 2022 and April 27, 2023 in the Republic of Korea.

The present invention relates to a battery pack and a vehicle including the same, and more particularly, to a battery pack manufactured in a cell-to-pack method and a vehicle including the battery pack.

### BACKGROUND ART

In general, a secondary battery refers to a battery that may be repeatedly charged and discharged, such as a lithium-ion battery, a lithium polymer battery, a nickel cadmium battery, a nickel hydride battery, or a nickel zinc battery. An output voltage of a battery cell corresponding to a basic unit of a secondary battery capable of charging and discharging is about 2.5 V to about 4.2 V.

Recently, as secondary batteries have been applied to devices requiring high output voltage and large charge capacity such as electric vehicles or energy storage systems (ESSs), a battery pack manufactured by connecting a plurality of battery cells in series or in parallel to form a battery module and connecting a plurality of battery modules in series or in parallel is widely used.

However, according to existing technology, because a battery pack is manufactured by accommodating battery cells in a metal case having a box shape to form a battery module and accommodating battery modules in a battery pack case, the overall weight and volume of the battery pack is increased and the energy density of the battery pack is reduced.

Also, when an existing cell-to-pack method of directly mounting a plurality of battery cells on a pack case of a battery pack is applied to a pouch-type battery cell with a soft case in order to increase the energy density of the battery pack, it is difficult to simultaneously handle or stack the plurality of battery cells and there is a risk of damage to the battery cells during a process of mounting the battery cells on the pack case.

Furthermore, in an existing cell-to-pack method, because a plurality of battery cells are space-intensively arranged in a pack case, it is difficult discharge gas or flame generated during thermal runaway in an intended direction, and when thermal runaway occurs in some battery cells, chain thermal runaway of the remaining battery cells may occur.

### INVENTION

### Technical Problem

The present invention is designed to solve the problems of the related art, and therefore the present invention is directed to providing a battery pack in which the overall weight and volume of the battery pack may be reduced and the energy density of the battery pack may be increased, and a vehicle including the battery pack.

Also, the present invention is directed to providing a battery pack in which, in a process of manufacturing a battery pack including a plurality of battery cells, handling and mounting of the battery cells may be facilitated, damage to the battery cells may be prevented, and manufacturing costs may be reduced by simplifying and lightening structures required to mount the battery cells, and a vehicle including the battery pack.

Also, the present invention is directed to providing a battery pack in which chain thermal runaway may be prevented by discharging gas or flame generated during thermal runaway of a battery cell in an intended direction, and a vehicle including the battery pack.

### Technical Solution

The present invention provides a battery pack according to claim 1.

In an embodiment, a plurality of venting holes may be formed, wherein the plurality of venting holes formed in the bent portion are arranged in a line.

In an embodiment, a plurality of venting holes may be formed, wherein the plurality of venting holes formed in the bent portion have a dotted line shape and are spaced apart from each other at a pre-set interval.

In an embodiment, the plurality of venting holes may be formed side by side.

In an embodiment, the plurality of venting holes may be formed in a zigzag shape.

In an embodiment, the plurality of venting holes may be formed so that an interval between the plurality of venting holes decreases from a central portion of the cell cover toward both ends.

In an embodiment, the plurality of venting holes may be formed so that an interval between the plurality of venting holes increases from a central portion of the cell cover toward both ends.

In an embodiment, the venting hole may be a through-hole passing through a part of the cell cover, or may be a slit hole formed in a slit shape by cutting a part of the cell cover.

According to the invention, the cell cover includes at least two bent portions, wherein the venting hole is formed in at least one of the at least two bent portions.

According to the invention, the cell cover includes a first cover portion covering one side surface of at least one of the plurality of battery cells, a second cover portion covering the other side surface of at least one of the plurality of battery cells, and a third cover portion connecting the first cover portion to the second cover portion and covering an upper end portion of the at least one battery cell, wherein the venting hole is formed between two of the first cover portion, the second cover portion, and the third cover portion.

According to the invention, the bent portion includes a first bent portion formed between the first cover portion and the third cover portion, and a second bent portion formed between the second cover portion and the third cover portion, wherein the venting hole is formed in at least one of the first bent portion and the second bent portion.

In an embodiment, a plurality of venting holes may be formed, and may be arranged in a line in at least one of the first bent portion and the second portion.

In an embodiment, the plurality of venting holes may be formed in a dotted line shape and may be spaced apart from each other at a pre-set interval.

In an embodiment, at least some of the plurality of pouch-type battery cells may be adhered and fixed to inner surfaces of the first cover portion and the second cover portion.

In an embodiment, the cell cover may be configured to support at least some of the plurality of pouch-type battery cells in an erected state.

In an embodiment, the cell cover may include an insulating coating layer on an inner surface thereof.

In an embodiment, the cell cover may be integrally formed.

In an embodiment, the cell cover may be formed of a material including stainless steel (SUS).

In an embodiment, the battery pack may include a battery assembly including a plurality of battery cells surrounded by the cell cover.

In an embodiment, the battery assembly may include a cell unit in which a plurality of battery cells each surrounded by the cell cover are stacked, a pair of side plates located at both ends of the cell unit to support the cell unit, and a pair of integrated end covers located in a direction intersecting the pair of side plates and configured to support the cell unit and integrally cover terminal portions of the plurality of battery cells.

In an embodiment, the battery pack may further include a handle unit coupled to the pair of side plates.

In an embodiment, each of the pair of side plates may include a support portion contacting the cell unit to support the cell unit, an end cover coupling portion coupled to the integrated end cover, and a handle coupling portion coupled to the handle unit.

In another aspect of the present invention, there is provided a vehicle including the battery pack.

### Advantageous Effects

According to embodiments of the present invention, the overall weight and volume of a battery pack may be reduced and the energy density of the battery pack may be increased.

Also, in a process of manufacturing a battery pack including a plurality of battery cells, handling and mounting of the battery cells may be facilitated, damage to the battery cells may be prevented, and manufacturing costs may be reduced by simplifying and lightening structures required to mount the battery cells.

Also, chain thermal runaway may be prevented by discharging gas or flame generated during thermal runaway of a battery cell in an intended direction.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawings, the invention is defined by the appended claims.
FIG. 1 is a schematic exploded perspective view illustrating a battery pack according to an embodiment of the present invention.
FIG. 2 is an enlarged view illustrating a portion A of FIG. 1.
FIG. 3 is a perspective view illustrating a battery cell surrounded by a cell cover according to one embodiment in a battery pack according to an embodiment of the present invention.
FIG. 4 is an exploded perspective view illustrating the cell cover and the battery cell of FIG. 3.
FIGS. 5 to 8 are views illustrating the battery cell surrounded by the cell cover of FIG. 3 according to other embodiments of the invention.
FIG. 9 is a view illustrating a modified embodiment of the battery cell surrounded by the cell cover of FIG. 3 that does not fall within the scope of the invention.
FIG. 10 is an exploded perspective view illustrating the cell cover and the battery cell of FIG. 9 that does not fall within the scope of the invention.
FIG. 11 is a view illustrating a battery assembly mounted on a battery pack according to an embodiment of the present disclosure.
FIG. 12 is an exploded perspective view illustrating the battery assembly of FIG. 11.
FIG. 13 is a partial enlarged view illustrating a bottom surface of a portion P1 of FIG. 11.
FIG. 14 is a view for describing a vehicle including a battery pack according to each embodiment of the present disclosure.

### BEST MODE

Hereinafter, preferred embodiments of the present invention will be described in detail with reference to the accompanying drawings. It should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the description proposed herein is just a preferable example for the purpose of illustrations only, not intended to limit the scope of the present disclosure, so it should be understood that other equivalents and modifications could be made thereto without departing from the scope of the present disclosure. The invention is defined by the appended claims.

The size of each element or a specific portion of the element shown in the drawings may be exaggerated, omitted or schematically drawn for the purpose of convenience and clarity of explanation. Accordingly, the size of each element may not substantially reflect its actual size. While describing the present disclosure, detailed descriptions of related well-known functions or configurations that may blur the points of the present disclosure are omitted.

Also, in the present specification, it will be understood that when elements are "coupled" or "connected" to each other, the elements may be directly coupled or connected to each other, or may be indirectly coupled or connected to each other with an intervening element therebetween.

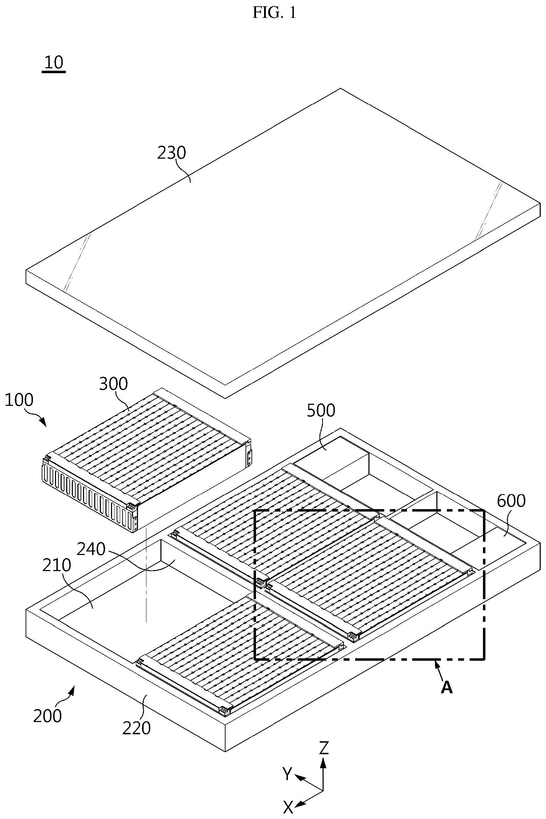

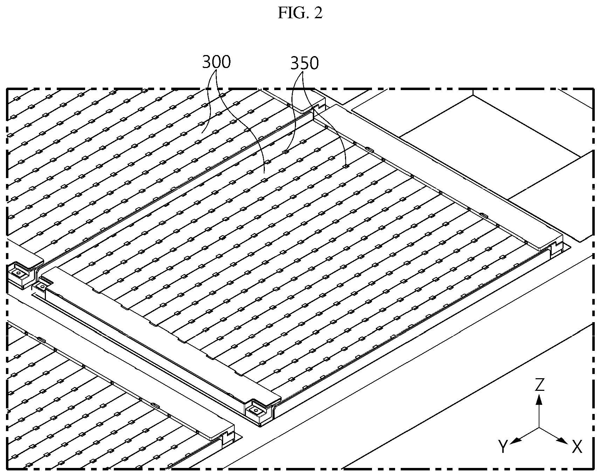

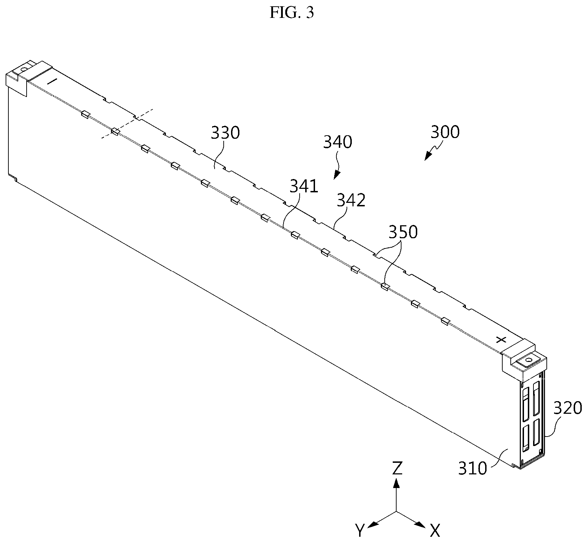

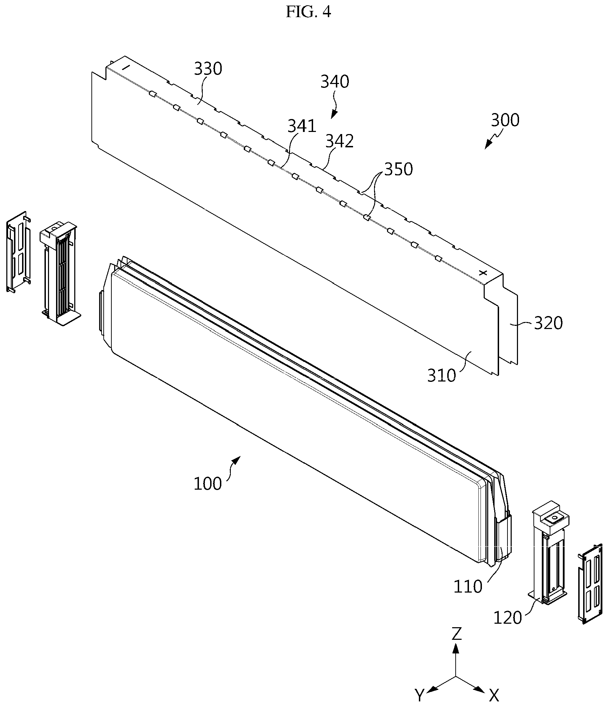

FIG. 1 is a schematic exploded perspective view illustrating a battery pack according to an embodiment of the present disclosure. FIG. 2 is an enlarged view illustrating a portion A of FIG. 1. FIG. 3 is a perspective view illustrating a battery cell surrounded by a cell cover according to one embodiment of the present disclosure in a battery pack according to an embodiment of the present disclosure. FIG. 4 is an exploded perspective view illustrating the cell cover and the battery cell of FIG. 3.

As described above, in general, a battery pack is manufactured by accommodating battery cells in a metal case having a box shape to form a battery module and accommodating battery modules in a battery pack. However, in this case, the overall weight and volume of the battery pack are increased and the energy density of the battery pack is reduced.

In order to solve this problem, a battery pack 10 according to an embodiment of the present disclosure is configured to directly accommodate a battery cell 100 in a pack case 200 of the battery pack 10 by removing a module case of a battery module.

Accordingly, because the battery cell 100 may be further accommodated in a space occupied by the module case of the battery module in the battery pack 10, space efficiency may be improved and battery capacity may be improved. That is, in the present disclosure, the module case of the battery module may not be included in a configuration.

However, an embodiment of using the module case is not completely excluded, and the pouch-type battery cell 100 of each embodiment of the present disclosure may be configured to be accommodated in the module case provided in the battery module when necessary.

That is, the battery module including the pouch-type battery cell 100 to which a cell cover 300 is coupled also falls within the scope of the present disclosure.

Also, the battery pack 10 according to the present embodiment may include a control module configured to control charging and discharging of the pouch-type battery cells 100. Referring to FIG. 1, the control module may include a battery management system (BMS) 500 and a battery blocking unit 600, and may be accommodated in the pack case 200 together with the battery cell 100 and the cell cover 300.

Even when simply described as the battery cell 100 in the specification, the battery cell 100 refers to the pouch-type battery cell 100.

Referring to FIGS. 1 and 2, the battery pack 10 according to a first embodiment of the present disclosure includes the pouch-type battery cell 100, the module case 200, and the cell cover 300.

The battery cell 100 that is a pouch-type battery cell 100 may include an electrode assembly, an electrolyte, and a pouch casing. That is, the battery cell 100 corresponds to a basic unit for charging and discharging, and may be manufactured by accommodating an electrode assembly and an electrolyte in a soft metal case and sealing the metal case. In this case, the electrode assembly may be manufactured by locating a separator between a positive electrode and a negative electrode.

Also, electrode leads 110 electrically connected to the electrode assembly may be provided at a front end and a rear end of the battery cell 100. The battery cell 100 may be a pouch-type battery cell. A plurality of pouch-type battery cells 100 may be included in the battery pack 10. The plurality of pouch-type battery cells 100 may be stacked in at least one direction.

The pack case 200 may have an empty inner space, and the plurality of pouch-type battery cells 100 may be accommodated in the inner space. In particular, in the present disclosure, the pouch-type battery cell 100 may be directly seated on the pack case 200.

Referring to FIGS. 1 and 2, the pack case 200 may include a lower frame 210, a side frame 220, and an upper cover 230. The pack case 200 may be formed of a plastic or metal material. In addition, the pack case 200 may include any of various casing materials for the battery pack 10 which are known at the time of filing the present application.

The plurality of battery cells 100 are seated on the lower frame 210. A reinforcing frame 240 may be formed on the lower frame 210. The side frame 220 may extend upward from an edge of the lower frame 210 to form an inner space in which the plurality of battery cells 100 are accommodated. When the reinforcing frame 240 is formed on the lower frame 210, the battery cell 100 is accommodated in a space formed by the side frame 220 and the reinforcing frame 240. The cell cover 300 is coupled to the battery cell 100. The upper cover 230 is coupled to the side frame 220 to cover the side frame 220 and the lower frame 210. A gas channel (not shown) through which gas may move may be formed in the upper cover 230.

Referring to FIGS. 3 and 4, the cell cover 300 does at least partially surround at least some of the plurality of pouch-type battery cells 100. That is, the cell cover 300 does partially surround the pouch-type battery cell 100 so that at least one side of the pouch-type battery cell 100 surrounded by the cell cover 300 is exposed to the outside.

The cell cover 300 is configured to support the pouch-type battery cell 100 in an upright state. In general, it is not easy to stack the pouch-type battery cells 100 in a vertical direction.

However, in the battery pack 10 according to an embodiment of the present disclosure, the cell cover 300 is configured to surround one or more pouch-type battery cells 100 and maintain the surrounded battery cells 100 in an upright state, that is, an erected state.

Also, the cell cover 300 may be integrally formed. In this case, the cell cover 300 may be formed by bending a metal plate having a plate structure. That is, the cell cover 300 may be formed by bending one plate. Accordingly, a bent portion 340 (see FIG. 3) is formed on the cell cover 300. Also, at least one venting hole 350 for discharging a flame or gas is formed in the bent portion 340 of the cell cover 300.

Referring to FIGS. 3 and 4, for example, a plurality of venting holes 350 is formed. Referring to FIGS. 3 and 4, in an embodiment, the plurality of venting holes 350 may be arranged in a line in the bent portion 340. For example, the plurality of venting holes 350 may be arranged in a line in at least one of a first bent portion 341 and a second bent portion 342. However, the present disclosure is not limited thereto, and the plurality of venting holes may be formed in a curved shape or shape including a curved line and a straight line together.

As shown in FIGS. 3 and 4, the plurality of venting holes 350 may be formed in a dotted line shape on a straight line. In this case, the plurality of venting holes 350 formed on the bent portion 340 may be spaced apart from each other at a pre-set interval. However, the present disclosure is not necessarily limited to a dotted line shape, and the pre-set interval does not have to be the same interval. As such, because bending becomes easier when the venting holes 350 are formed in a dotted line shape on a straight line, the cell cover 300 may be easily manufactured.

Referring to FIG. 3, the plurality of venting holes 350 may be formed side by side. For example, the venting hole 350 formed in the first bent portion 341 and the venting hole 350 formed in the second bent portion 342 may be located on one dotted line of FIG. 3 to face each other. The first bent portion 341 and the second bent portion 342 will be described below.

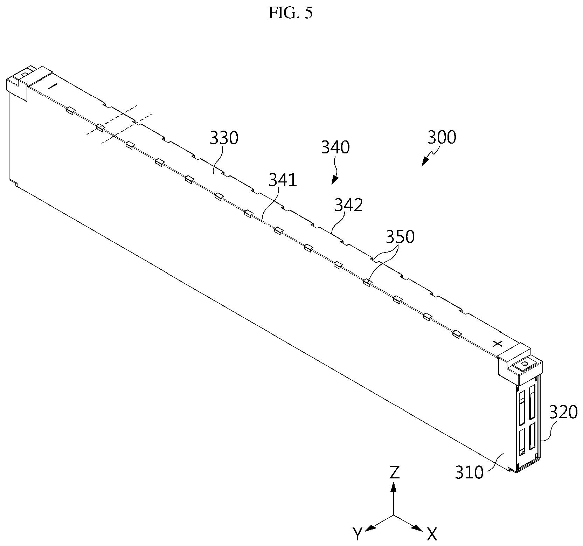

FIGS. 5 to 8 are views illustrating the battery cell surrounded by the cell cover of FIG. 3 according to other embodiments.

Referring to FIG. 5, the plurality of venting holes 350 may be formed in a zigzag shape. For example, the venting hole 350 formed in the first bent portion 341 and the venting hole 350 formed in the second bent portion 342 may be located at different dotted lines of FIG. 5 and may be alternately formed not to face each other.

As such, when the plurality of venting holes 350 are formed in a zigzag shape and a thermal event occurs in one pouch-type battery cell 100, a flame or gas from the pouch-type battery cell 100 may be fundamentally blocked from moving to other neighboring pouch-type battery cells 100. However, according to a position of an injection molded product, the plurality of venting holes 350 may be formed side by side to face each other as shown in FIG. 3, and in this case, a heat insulating material may be appropriately located to prevent a flame or gas from moving from one pouch-type battery cell 100 to other neighboring pouch-type battery cells 100.

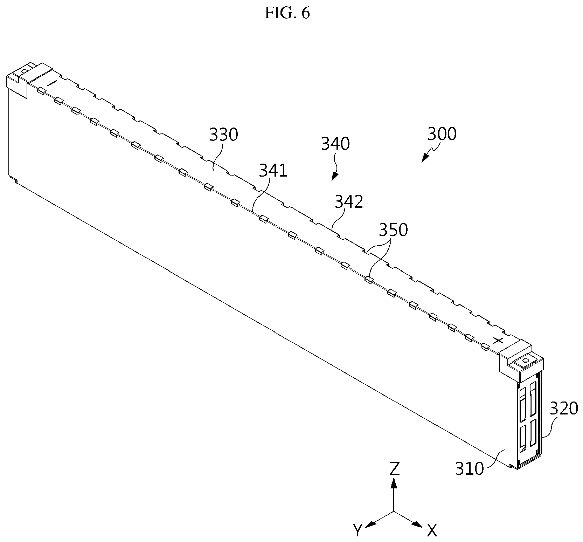

Also, in another embodiment, referring to FIG. 6, the plurality of venting holes 350 may be formed so that an interval between the plurality of venting holes 350 decreases from a central portion of the cell cover 300 toward both ends, that is, toward portions where the electrode leads 110 (see FIG. 4) of the battery cell 100 are located. That is, more venting holes 350 may be formed at both ends than at the central portion of the cell cover 300. This embodiment is advantageous for side venting configured to discharge more gas through a side portion.

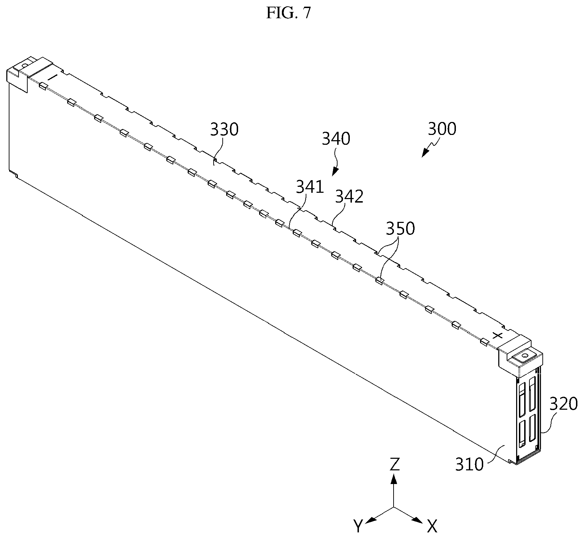

In another embodiment, referring to FIG. 7, the plurality of venting holes 350 may be formed so that an interval between the plurality of venting holes 350 increases from the central portion of the cell cover 300 toward both ends. That is, more venting holes 350 may be formed at the central portion than at both ends of the cell cover 300. This embodiment is advantageous for central venting configured to discharge more gas through the central portion.

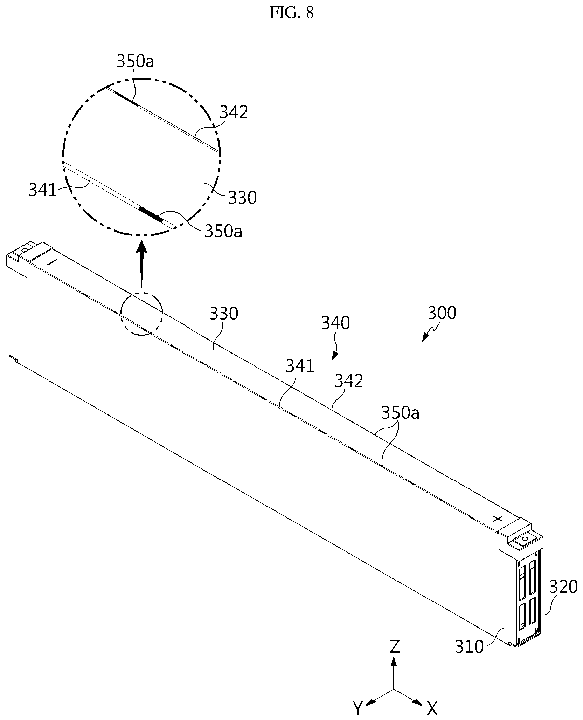

In another embodiment, referring to FIG. 8, the venting hole 350 may include a slit hole 350a formed in a slit shape by cutting a part of the cell cover 300. This is another embodiment of an embodiment in which the venting hole 350 in FIG. 3 is a through-hole passing through a part of the cell cover 300.

The cell cover 300 may be formed of a material including stainless steel (SUS) that is easily processed and has high corrosion resistance. The cell cover 300 may be formed of any of various materials other than SUS to ensure rigidity. In particular, the cell cover 300 may be formed of a metal material. For example, the cell cover 300 may be formed of a chromium (Cr)-based metal material. When the cell cover 300 is formed of a metal material, the cell cover 300 may more stably maintain a state in which the battery cells 100 are stacked and more safely protect the battery cells 100 from external impact. Also, as an example, when the cell cover 300 is formed of a steel material such as SUS, the overall structure may be stably maintained when a flame is generated from the battery cell 100 due to a high melting point. In particular, because a steel material has a higher melting point than an aluminum material, the cell cover 300 may not be melted by the flame ejected from the battery cell 100 and a shape of the cell cover 300 may be stably maintained. Accordingly, the effect of preventing or delaying flame propagation between the battery cells 100, a venting control effect, and the like may be excellent.

The cell cover 300 may include an insulating coating layer (not shown) on an inner surface thereof. The insulating coating layer (not shown) may be obtained by coating, applying, or attaching any one insulating material such as silicone resin, polyamide, or rubber. According to the insulating coating layer of the cell cover 300 according to the present embodiment, the insulating coating effect may be maximized with a minimum amount of coating. Also, because the insulating coating layer (not shown) is applied to the inner surface of the cell cover 300, insulation between the battery cell 100 and the cell cover 300 may be enhanced.

The cell cover 300 is configured so that at least one side of the surrounded pouch-type battery cell 100 is exposed toward a bottom surface of the battery pack 10.

Referring to FIGS. 1 and 2, the cell cover 300 configured to surround at least some of the plurality of pouch-type battery cells 100 is accommodated in the inner space of the pack case 200.

The cell cover 300 is configured to surround a various number of pouch-type battery cells 100 together. For example, one cell cover 300 may be configured to surround one pouch-type battery cell 100 together. Alternatively, one cell cover 300 may be configured to surround two pouch-type battery cells 100 together. Alternatively, one cell cover 300 may be configured to surround three pouch-type battery cells 100 together. Alternatively, one cell cover 300 may be configured to surround a larger number of pouch-type battery cells 100 together.

The cell cover 300 includes at least two bent portions 340, and the venting hole 350 is formed in at least one of the two bent portions 340. Referring to FIGS. 3 and 4, the cell cover 300 does include a first cover portion 310, a second cover portion 320, and a third cover portion 330.

The first cover portion 310 is configured to cover one side surface of at least one of the plurality of battery cells 100. The first cover portion 310 may extend downward from one end of the third cover portion 330. For example, the first cover portion 310 may extend long downward from a left end of the third cover portion 330. The first cover portion 310 may surround a wide surface of the battery cell 100 accommodated therein.

The second cover portion 320 is configured to cover the other side surface of at least one of the plurality of battery cells 100. The second cover portion 320 may be horizontally spaced apart from the first cover portion 310. The second cover portion 320 may extend downward from the other end of the third cover portion 330. For example, the second cover portion 320 may extend long downward from a right end of the third cover portion 330. The second cover portion 320 may surround a wide surface of the battery cell 100 accommodated therein.

The third cover portion 330 connects the first cover portion 310 to the second cover portion 320 and covers an upper end portion of at least one battery cell 100.

As described above, the bent portion 340 is formed on the cell cover 300. The bent portion 340 does include the first bent portion 341 and the second bent portion 342. The first bent portion 341 is formed between the first cover portion 310 and the third cover portion 330. For example, the first cover portion 310 may be formed by being bent at a right angle from one side of the third cover portion 330 downward, and the first bent portion 341 may be formed in a portion bent from the third cover portion 330. Also, the second bent portion 342 is formed between the second cover portion 320 and the third cover portion 330. For example, the second cover portion 320 may be formed by being bent at a right angle from the other side of the third cover portion 330 downward, and the second bent portion 342 may be formed in a portion bent from the third cover portion 330. However, the bending from the third cover portion 330 does not have to be at a right angle, the bending at a right angle is only an example, and there may be various bending angles.

The venting hole 350 for discharging gas or flame is formed between two of the first cover portion 310, the second cover portion 320, and the third cover portion 330. In detail, the venting hole 350 is formed in at least one of the first bent portion 341 and the second bent portion 342. That is, the venting hole 350 may be formed only in the first bent portion 341, may be formed only in the second bent portion 342, or may be formed in both the first bent portion 341 and the second bent portion 342.

At least some of the plurality of pouch-type battery cells 100 may be adhered and fixed to inner surfaces of the first cover portion 310 and the second cover portion 320. A member for adhesion may be thermally conductive. Through the adhesion, the cell cover 300 may be firmly coupled to the battery cell 100, and may help discharge heat generated in the battery cell 100 to the outside of the battery cell 100.

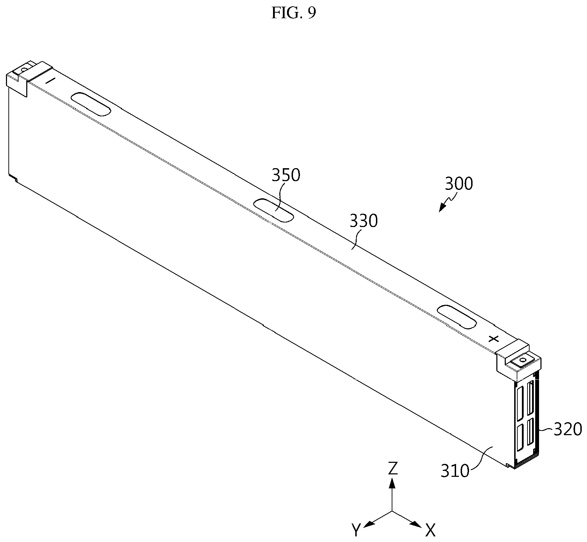

FIG. 9 is a view illustrating a modified embodiment of the battery cell surrounded by the cell cover of FIG. 3 that does not fall within the scope of this invention.

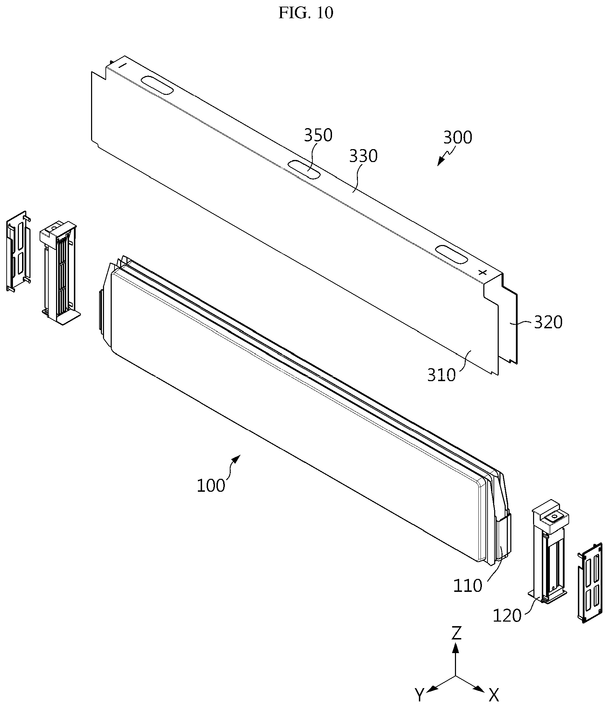

FIG. 10 is an exploded perspective view illustrating the cell cover and the battery cell of FIG. 9 that does not fall within the scope of this invention.

The venting hole 350 may be formed at any of various positions of the cell cover 300 according to an intended venting direction. For example, referring to FIGS. 9 and 10, the venting hole 350 may be formed in a central portion of the third cover portion 330. The venting hole 350 may be formed by forming a notch in a certain portion of the cell cover 300. One or more venting holes 350 may be formed. As such, when the venting hole 350 is formed at a central portion of the third cover portion 330, gas or the like may be discharged upward. Accordingly, because gas or flame generated during thermal runaway of a battery cell is discharged in an intended direction, for example, toward an upper side where other battery cells or other battery modules are not located, chain thermal runaway may be prevented.

In this embodiment, an inner space may be limited by the first cover portion 310, the second cover portion 320, and the third cover portion 330 of the cell cover 300. One or more battery cells 100 may be accommodated in the limited inner space of the cell cover 300.

The cell cover 300 may be provided in an 'n' shape, a 'u' shape, or a ' 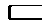 ' shape surrounding three surfaces of at least one battery cell 100. Referring to FIG. 1, the cell cover 300 may be configured so that the plurality of battery cells 100 are horizontally stacked while being erected in a vertical direction.

For example, referring to FIG. 1, each cell cover 300 may surround one or more battery cells 100, and the plurality of battery cells 100 surrounded by each cell cover 300 may be stacked in a Y-axis direction of FIG. 2. In this case, a structure in which the plurality of battery cells 100 are stacked side by side in the Y-axis direction in an upright state may be stably maintained by the cell cover 300.

Also, because the cell cover 300 surrounds three surfaces of at least one battery cell 100, a bus bar or a terminal of each unit may be easily located on a side surface not surrounded by each cell cover 300.

The battery cell 100 such as the pouch-type battery cell 100 may be formed in a substantially hexahedral shape. The electrode leads 110 (see FIG. 4), that is, a negative electrode lead and a positive electrode lead, may be respectively formed on two of six surfaces. The cell cover 300 is provided to surround at least parts of three of the four surfaces of the battery cell 100 having the six surfaces excluding the two surfaces on which the electrode leads are formed.

Referring to FIGS. 3 and 4, a bus bar frame 120 may be coupled to the cell cover 300. The bus bar frame may be configured to support a bus bar electrically connected to the electrode lead 110 of at least one battery cell 100 covered by the cell cover 300. In this case, the bus bar frame 120 may include a terminal electrically connected to the bus bar.

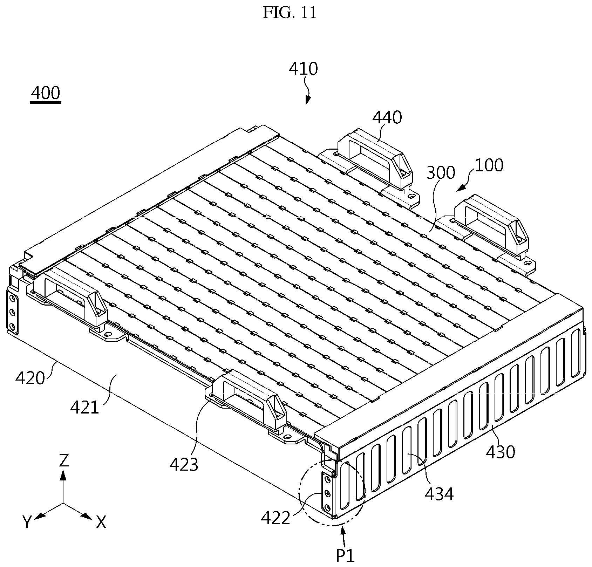

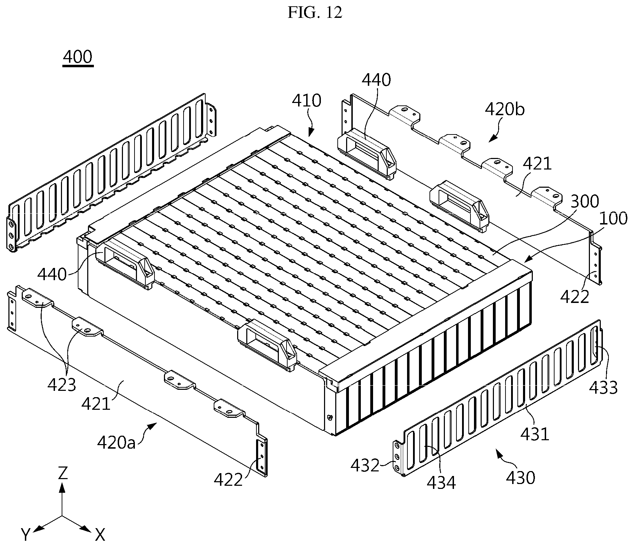

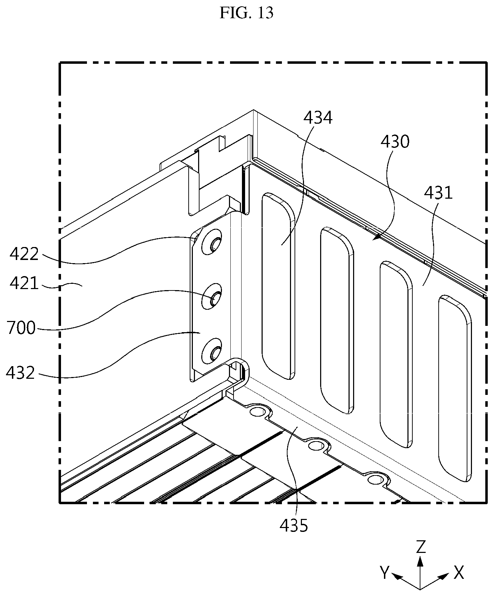

FIG. 11 is a view illustrating a battery assembly mounted on a battery pack according to an embodiment of the present disclosure. FIG. 12 is an exploded perspective view illustrating the battery assembly of FIG. 11. FIG. 13 is a partial enlarged view illustrating a bottom surface of a portion P1 of FIG. 11. FIGS. 11 to 13 are views illustrating a modified embodiment of the battery cell of FIG. 1.

Referring to FIGS. 11 to 13, the battery pack 10 may include a battery assembly 400 including a plurality of battery cells 100 surrounded by the cell cover 300.

The battery assembly 400 may include a cell unit 410, a pair of side plates 420, and a pair of integrated end covers 430, and according to an embodiment, may further include a handle unit 440 coupled to the pair of side plates 420.

A plurality of battery cells 100 each surrounded by the cell cover 300 are stacked in the cell unit 410. The cell cover 300 and the battery cell 100 are the same as those described above, and thus, a detailed description thereof will be omitted.

Referring to FIGS. 11 and 12, the pair of side plates 420 may be located at both ends of a plurality of cell units 410 in a width direction (Y-axis direction of FIG. 11) to support the plurality of cell units 410. To this end, at least one of the pair of side plates 420 may include a support portion 421, an end cover coupling portion 422, and a handle coupling portion 423.

The support portion 421 may contact one side surface or the other side surface of the plurality of cell units 410 in the width direction to support the plurality of cell units 410. In this case, the support portion 421 may have a plate structure.

The end cover coupling portion 422 may extend from both ends of the support portion 421 sideward (X-axis direction of FIG. 11) to be coupled to one end of the integrated end cover 430 in a side direction.

The handle coupling portion 423 may extend, for example, from an upper end of the support portion 421 upward (Z-axis direction of FIG. 11) to be coupled to at least one of the plurality of handle units 440. The handle coupling portion 423 may be configured to be coupled to and separated from at least one handle unit 440.

The pair of side plates 420 may block or group the plurality of cell units 410 along with the integrated end cover 430 to uniformly distribute pressure applied to the plurality of cell units 410 to the entire cell units 410. Also, the pair of side plates 420 may be formed of a metal material including aluminum, or may be formed of a material obtained by combining aluminum with a polymer synthetic resin through insert molding.

The pair of integrated end covers 430 are located in a direction intersecting the pair of side plates 420 to support the cell units 410. For example, the pair of integrated end covers 430 are located at both ends of the plurality of cell units 410 in a longitudinal direction (X-axis direction of FIG. 11) to support the plurality of cell units 410. The pair of integrated end covers 430 may be configured to integrally cover terminal portions of the battery cells 100 included in the plurality of cell units 410.

That is, referring to FIG. 12, each integrated end cover 430 may include, in the side direction, one end coupled to a first side plate 420a that is one of the pair of side plates 420 and the other end connected to a second side plate 420b that is the other of the pair of side plates 420, to integrally cover the terminal portions of the battery cells 100 included in the plurality of cell units 410. In this case, the integrated end cover 430 may include a vent hole 434 at a position corresponding to each of the plurality of cell units 410. The integrated end cover 430 may be formed of a metal material including aluminum or a polymer synthetic resin, or may be formed of a material obtained by combining a metal material including aluminum with a polymer synthetic resin through insert molding.

In the battery assembly 400, because the integrated end cover 430 is applied, individual end covers respectively applied to the cell units 410 and covering terminals or bus bar portions of the battery cells 100 included in the cell units 410 may be omitted, thereby simplifying a manufacturing process.

The handle unit 440 may be configured to be hold by an operator who carries the battery assembly 400 or to be connected to a certain transfer device for lifting or transferring the battery assembly 400.

The handle unit 440 may be configured to be detachably coupled to the pair of side plates 420. Also, the handle unit 440 may be formed of a metal material having a certain strength, a polymer synthetic resin, or a combination thereof.

The scale of the battery assembly may be increased by increasing the number of cell units 410 that are stacked.

As shown in detail in FIG. 12, the pair of side plates 420 and the pair of integrated end covers 430 of the battery assembly 400 may be coupled to each other to block or group the plurality of cell units 410. To this end, the integrated end cover 430 may include a terminal cover portion 431, a first coupling portion 432, and a second coupling portion 433.

The terminal cover portion 431 may be configured to integrally cover the terminal portions (electrode lead portions) of the battery cells 100 included in the plurality of cell units 410. The terminal cover portion 431 may include the vent hole 434 at a position corresponding to each cell unit 410.

The first coupling portion 432 may extend from the terminal cover portion 431 toward the first side plate 420a to be coupled to the end cover coupling portion 422 of the first side plate 420a. In this case, the first coupling portion 432 and the end cover coupling portion 422 may be coupled to each other by a fastening member such as a bolt or rivet.

The second coupling portion 433 may extend from the terminal cover portion 431 toward the second side plate 420b to be coupled to the end cover coupling portion 422 of the second side plate 420b. In this case, the second coupling portion 433 and the end cover coupling portion 422 may be coupled to each other by a fastening member such as a bolt or a rivet.

The handle unit 440 may be coupled to the handle coupling unit 423 of the corresponding side plate 420 in various ways to be coupled and separated.

As shown in FIG. 13, the first coupling portion 432 of the integrated end cover 430 may be coupled to the end cover coupling portion 422 of the first side plate 420a through a fastening member 700.

Also, the integrated end cover 430 may include a cell unit support portion 435. The cell unit support portion 435 may extend from the terminal cover portion 431 including the vent hole 434 toward bottom surfaces of the plurality of cell units 410 to support the plurality of cell units 410. In this case, the cell unit support portion 435 may be configured to support lower ends of the bus bar frames 120 provided in the plurality of cell units 410.

As such, because the cell units 410 each including at least one battery cell 100 is blocked and fixed to the pair of side plates 420 and the integrated end covers 430, handling and mounting of the battery cells 100 mounted on the battery pack 10 may be facilitated, structures required to mount the battery cells 100 may be simplified and lightened, and manufacturing costs may be reduced.

According to the present disclosure, because the plurality of battery cells 100 are partially covered by the cell cover 300 having a simplified structure and are directly mounted on the pack case 200 rather than being accommodated in a separate module case and mounted on the pack case 200 of the battery pack 10, the overall weight and volume of the battery pack 10 may be reduced, the energy density of the battery pack 10 may be increased, damage to the battery cells 100 occurring in a process of directly mounting the plurality of battery cells 100 on the case and using the battery cells may be prevented, and swelling control of the battery cell 100 and design of a gas venting path may be facilitated.

Also, because the plurality of venting holes 350 are formed along a bent portion of the cell cover 300, a sheet metal process of manufacturing the cell cover 300 and an assembly process of inserting the battery cells 100 into the cell cover 300 may be facilitated, and a venting passage of gas discharged from the battery cell 100 may be secured.

Also, because the cell units 410 each including at least one battery cell 100 are blocked and fixed to the pair of side plates 420 and the integrated end cover 430, handling and mounting of the battery cells 100 mounted on the battery pack 10 may be facilitated, structures required to mount the battery cells 100 may be simplified and lightened, and manufacturing costs may be reduced.

Furthermore, one of ordinary skill in the art will clearly understand from the following description that various embodiments of the present disclosure may also be used to solve various technical problems not mentioned above.

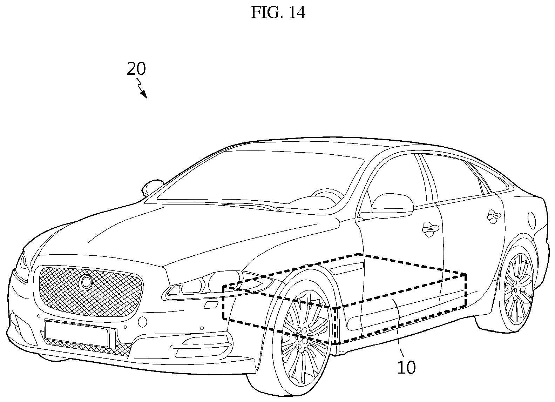

FIG. 14 is a view for describing a vehicle including a battery pack according to each embodiment of the present disclosure.

A vehicle 20 according to an embodiment of the present disclosure may include one or more battery packs 10 according to each of the above embodiments. The vehicle 20 includes any of various vehicles 20 provided to use electricity such as an electric vehicle or a hybrid vehicle.

It will be understood by one of ordinary skill in the art that when terms indicating directions such as upper, lower, left, and right are used, these terms are only for convenience of explanation and may vary according to a position of a target object, a position of an observer, etc.

Although the embodiments of the present invention have been illustrated and described above, the present invention is not limited to the above-described specific embodiments. Various modified embodiments may be made by one of ordinary skill in the art without departing from the scope of the present invention as claimed in the claims. Hence, the disclosed embodiments should be considered in descriptive sense only and not for purposes of limitation. That is, the scope of the present invention is defined only by the following claims.

### INDUSTRIAL APPLICABILITY

The present invention relates to a battery pack and a vehicle including the same, and particularly, may be used in industries related to secondary batteries.

## Claims

1. A battery pack (10) comprising:
a plurality of pouch-type battery cells (100);
a pack case (200) having an inner space in which the plurality of pouch-type battery cells are accommodated; and
a cell cover (300) at least partially surrounding and supporting at least some of the plurality of pouch-type battery cells, in the inner space of the pack case (200),
the cell cover (300) being configured so that at least one side of the surrounded pouch-type battery cells (100) is exposed toward a bottom surface of the battery pack (10),
wherein the cell cover (300) comprises a bent portion (340) formed in a bent shape, and at least one venting hole (350) for discharging a flame or gas is formed in the bent portion (340) of the cell cover (300),
wherein the bent portion (340) includes at least a first bent portion (341) and a second bent portion (342),
wherein the venting hole (350) is formed in at least one of the at least two bent portions (341, 342),
wherein the cell cover (300) comprises:
a first cover portion (310) covering one side surface of at least one of the plurality of battery cells;
a second cover portion (320) covering the other side surface of at least one of the plurality of battery cells; and
a third cover portion (330) connecting the first cover portion (310) to the second cover portion (320) and covering an upper end portion of the at least one battery cell,
wherein
the first bent portion (341) is formed between the second cover portion (320) and the third bent portion (330) and
the second bent portion (342) is formed between the second cover portion (320) and the third portion (330),
wherein the venting hole (350) is formed between two of the first cover portion (310), the second cover portion (320), and the third cover portion (330).

2. The battery pack (10) according to claim 1, wherein a plurality of venting holes (350) are formed,
wherein the plurality of venting holes (350) formed in the bent portion (340) are arranged in a line.

3. The battery pack (10) according to claim 1, wherein a plurality of venting holes (350) are formed,
wherein the plurality of venting holes (350) formed in the bent portion (340) have a dotted line shape and are spaced apart from each other at a pre-set interval.

4. The battery pack (10) according to claim 3, wherein the plurality of venting holes (350) are formed to face each other in a direction transverse to the bent portion (340).

5. The battery pack (10) according to claim 3, wherein the plurality of venting holes (350) are formed not to face each other in a direction transverse to the bent portion (340).

6. The battery pack (10) according to claim 3, wherein the plurality of venting holes (350) are formed so that an interval between the plurality of venting holes (350) decreases from a central portion of the cell cover (300) toward both ends.

7. The battery pack (10) according to claim 3, wherein the plurality of venting holes (350) are formed so that an interval between the plurality of venting holes (350) increases from a central portion of the cell cover (300) toward both ends.

8. The battery pack (10) according to claim 1, wherein the venting hole (350) is a through-hole passing through a part of the cell cover (300), or is a slit hole formed in a slit shape by cutting a part of the cell cover (300).

9. The battery pack (10) according to any of the preceding claims, wherein the bent portion (340) comprises:
wherein the venting hole (350) is formed in at least one of the first bent portion (341) and the second bent portion (342).

10. The battery pack (10) according to claim 1, comprising a battery assembly comprising a plurality of battery cells surrounded by the cell cover (300).

11. The battery pack (10) according to claim 10, wherein the battery assembly comprises:
a cell unit(410) in which a plurality of battery cells (100) each surrounded by the cell cover (300) are stacked;
a pair of side plates (420) located at both ends of the cell unit to support the cell unit; and
a pair of integrated end covers (430) located in a direction intersecting the pair of side plates and configured to support the cell unit and integrally cover terminal portions of the plurality of battery cells.

12. The battery pack (10) according to claim 11, further comprising a handle unit (440) coupled to the pair of side plates (420),
wherein each of the pair of side plates comprises:
a support portion (421) contacting the cell unit (410) to support the cell unit;
an end cover coupling portion (422) coupled to the integrated end cover (430); and
a handle coupling portion (423) coupled to the handle unit.

13. A vehicle comprising the battery pack (10) according to any one of claims 1 to 12.

## Patentansprüche

1. Batteriepack (10), umfassend:
eine Mehrzahl von Batteriezellen (100) vom Beuteltyp;
ein Packgehäuse (200), welches einen inneren Raum aufweist, in welchem die Mehrzahl von Batteriezellen vom Beuteltyp aufgenommen ist; und
eine Zellenabdeckung (300), welche wenigstens einige der Mehrzahl von Batteriezellen vom Beuteltyp in dem inneren Raum des Packgehäuses (200) wenigstens teilweise umgibt und haltert,
wobei die Zellenabdeckung (300) derart eingerichtet ist, dass wenigstens eine Seite der umgebenen Batteriezellen (100) vom Beuteltyp in Richtung einer unteren Fläche des Batteriepacks (10) freigelegt ist,
wobei die Zellenabdeckung (300) einen gebogenen Abschnitt (340) umfasst, welcher in einer gebogenen Form gebildet ist, und wenigstens ein Entlüftungsloch (350) zum Abführen einer Flamme oder eines Gases im dem gebogenen Abschnitt (340) der Zellenabdeckung (300) gebildet ist,
wobei der gebogene Abschnitt (340) wenigstens den ersten gebogenen Abschnitt (341) und den zweiten gebogenen Abschnitt (342) umfasst,
wobei das Entlüftungsloch (350) in wenigstens einem der wenigstens zwei gebogenen Abschnitte (341, 342) gebildet ist,
wobei die Zellenabdeckung (300) umfasst:
einen ersten Abdeckungsabschnitt (310), welcher eine Seitenfläche wenigstens einer der Mehrzahl von Batteriezellen abdeckt;
einen zweiten Abdeckungsabschnitt (320), welcher die andere Seitenfläche wenigstens einer der Mehrzahl von Batteriezellen abdeckt; und
einen dritten Abdeckungsabschnitt (330), welcher den ersten Abdeckungsabschnitt (310) mit dem zweiten Abdeckungsabschnitt (320) verbindet und einen oberen Endabschnitt der wenigstens einen Batteriezelle abdeckt,
wobei der erste gebogene Abschnitt (341) zwischen dem ersten Abdeckungsabschnitt (310) und dem dritten Abdeckungsabschnitt (330) gebildet ist und der zweite gebogene Abschnitt (342) zwischen dem zweiten Abdeckungsabschnitt (320) und dem dritten Abdeckungsabschnitt (330) gebildet ist,
wobei das Entlüftungsloch (350) zwischen zwei aus dem ersten Abdeckungsabschnitt (310), dem zweiten Abdeckungsabschnitt (320) und dem dritten Abdeckungsabschnitt (330) gebildet ist.

2. Batteriepack (10) nach Anspruch 1, wobei eine Mehrzahl von Entlüftungslöchern (350) gebildet ist,
wobei die Mehrzahl von Entlüftungslöchern (350), welche in dem gebogenen Abschnitt (340) gebildet sind, in einer Linie angeordnet ist.

3. Batteriepack (10) nach Anspruch 1, wobei eine Mehrzahl von Entlüftungslöchern (350) gebildet ist,
wobei die Mehrzahl von Entlüftungslöchern (350), welche in dem gebogenen Abschnitt (340) gebildet sind, eine Form einer gepunkteten Linie aufweist und in einem voreingestellten Intervall voneinander beabstandet ist.

4. Batteriepack (10) nach Anspruch 3, wobei die Mehrzahl von Entlüftungslöchern (350) derart gebildet ist, dass diese in einer zu dem gebogenen Abschnitt (340) transversalen Richtung einander zugewandt sind.

5. Batteriepack (10) nach Anspruch 3, wobei die Mehrzahl von Entlüftungslöchern (350) derart gebildet ist, dass diese in einer zu dem gebogenen Abschnitt (340) transversalen Richtung nicht einander zugewandt sind.

6. Batteriepack (10) nach Anspruch 3, wobei die Mehrzahl von Entlüftungslöchern (350) derart gebildet ist, dass ein Intervall zwischen der Mehrzahl von Entlüftungslöchern (350) von einem zentralen Abschnitt der Zellenabdeckung (300) in Richtung beider Enden abnimmt.

7. Batteriepack (10) nach Anspruch 3, wobei die Mehrzahl von Entlüftungslöchern (350) derart gebildet ist, dass ein Intervall zwischen der Mehrzahl von Entlüftungslöchern (350) von einem zentralen Abschnitt der Zellenabdeckung (300) in Richtung beider Enden zunimmt.

8. Batteriepack (10) nach Anspruch 1, wobei das Entlüftungsloch (350) ein Durchgangsloch ist, welches durch einen Teil der Zellenabdeckung (300) verläuft, oder ein Schlitzloch ist, welches durch ein Ausschneiden eines Teils der Zellenabdeckung (300) in einer Schlitzform gebildet ist.

9. Batteriepack (10) nach einem der vorhergehenden Ansprüche, wobei der gebogene Abschnitt (340) umfasst:
wobei das Entlüftungsloch (350) in mindestens einem des ersten gebogenen Abschnitts (341) und des zweiten gebogenen Abschnitts (342) gebildet ist.

10. Batteriepack (10) nach Anspruch 1, umfassend eine Batterieanordnung, welche eine Mehrzahl von Batteriezellen umfasst, die durch die Zellenabdeckung (300) umgeben sind.

11. Batteriepack (10) nach Anspruch 10, wobei die Batterieanordnung umfasst:
eine Zelleneinheit (410), in welcher eine Mehrzahl von Batteriezellen (100) gestapelt ist, welche jeweils durch die Zellenabdeckung (300) umgeben sind;
ein Paar von Seitenplatten (420), welche an beiden Enden der Zelleneinheit angeordnet sind, um die Zelleneinheit zu haltern; und
ein Paar von integrierten Endabdeckungen (430), welche in einer Richtung angeordnet sind, die das Paar von Seitenplatten schneidet, und welche dazu eingerichtet sind, die Zelleneinheit zu haltern und Anschlussabschnitte der Mehrzahl von Batteriezellen integral abzudecken.

12. Batteriepack (10) nach Anspruch 11, ferner umfassend eine Griffeinheit (440), welche mit dem Paar von Seitenplatten (420) gekoppelt ist,
wobei jede des Paars von Seitenplatten umfasst:
einen Halterungsabschnitt (421), welcher die Zelleneinheit (410) kontaktiert, um die Zelleneinheit zu haltern;
einen Endabdeckungskopplungsabschnitt (422), welcher mit der integrierten Endabdeckung (430) gekoppelt ist; und
einen Griffkopplungsabschnitt (423), welcher mit der Griffeinheit gekoppelt ist.

13. Fahrzeug, umfassend den Batteriepack (10) nach einem der Ansprüche 1 bis 12.

## Revendications

1. Bloc-batterie (10) comprenant :
une pluralité de cellules de batterie de type poche (100);
un boîtier de bloc (200) ayant un espace intérieur dans lequel sont logées la pluralité de cellules de batterie de type poche ; et
un couvercle de cellule (300) entourant et supportant au moins partiellement au moins certaines de la pluralité de cellules de batterie de type poche, dans l'espace intérieur du boîtier de bloc (200),
le couvercle de cellule (300) étant configuré de sorte qu'au moins un côté des cellules de batterie de type poche (100) entourées est exposé vers une surface inférieure du bloc-batterie (10),
dans lequel le couvercle de cellule (300) comprend une portion pliée (340) formée en une forme pliée, et au moins un trou d'aération (350) pour décharger une flamme ou
un gaz est formé dans la portion pliée (340) du couvercle de cellule (300),
dans lequel la portion pliée (340) comporte au moins une première portion pliée (341) et une deuxième portion pliée (342),
dans lequel le trou d'aération (350) est formé dans au moins une parmi les au moins deux portions pliées (341, 342),
dans lequel le couvercle de cellule (300) comprend :
une première portion de couvercle (310) recouvrant une surface latérale d'au moins une parmi la pluralité de cellules de batterie ;
une deuxième portion de couvercle (320) recouvrant l'autre surface latérale d'au moins une parmi la pluralité de cellules de batterie ; et
une troisième portion de couvercle (330) reliant la première portion de couvercle (310) à la deuxième portion de couvercle (320) et recouvrant une portion d'extrémité supérieure de l'au moins une cellule de batterie,
dans lequel la première portion pliée (341) est formée entre la première portion de couvercle (310) et la troisième portion de couvercle (330) et la deuxième portion pliée (342) est formée entre la deuxième portion de couvercle (320) et la troisième portion pliée (330),
dans lequel le trou d'aération (350) est formé entre deux parmi la première portion de couvercle (310), la deuxième portion de couvercle (320) et la troisième portion de couvercle (330).

2. Bloc-batterie (10) selon la revendication 1, dans lequel une pluralité de trous d'aération (350) sont formés,
dans lequel la pluralité de trous d'aération (350) formés dans la portion pliée (340) sont agencés en ligne.

3. Bloc-batterie (10) selon la revendication 1, dans lequel une pluralité de trous d'aération (350) sont formés,
dans lequel la pluralité de trous d'aération (350) formés dans la portion pliée (340) ont une forme de ligne en pointillés et sont espacés les uns des autres à un intervalle prédéfini.

4. Bloc-batterie (10) selon la revendication 3, dans lequel la pluralité de trous d'aération (350) sont formés pour se faire face dans une direction transversale à la portion pliée (340).

5. Bloc-batterie (10) selon la revendication 3, dans lequel la pluralité de trous d'aération (350) sont formés pour ne pas se faire face dans une direction transversale à la portion pliée (340).

6. Bloc-batterie (10) selon la revendication 3, dans lequel la pluralité de trous d'aération (350) sont formés de sorte qu'un intervalle entre la pluralité de trous d'aération (350) diminue à partir d'une portion centrale du couvercle de cellule (300) vers les deux extrémités.

7. Bloc-batterie (10) selon la revendication 3, dans lequel la pluralité de trous d'aération (350) sont formés de sorte qu'un intervalle entre la pluralité de trous d'aération (350) augmente à partir d'une portion centrale du couvercle de cellule (300) vers les deux extrémités.

8. Bloc-batterie (10) selon la revendication 1, dans lequel le trou d'aération (350) est un trou traversant passant par une partie du couvercle de cellule (300), ou est un trou fendu formé en forme de fente par découpe d'une partie du couvercle de cellule (300).

9. Bloc-batterie (10) selon l'une quelconque des revendications précédentes, dans lequel la portion pliée (340) comprend :
dans lequel le trou d'aération (350) est formé dans au moins un parmi la première portion pliée (341) et la deuxième portion pliée (342).

10. Bloc-batterie (10) selon la revendication 1, comprenant un ensemble batterie comprenant une pluralité de cellules de batterie entourées par le couvercle de cellule (300).

11. Bloc-batterie (10) selon la revendication 10, dans lequel l'ensemble batterie comprend :
une unité de cellule (410) dans laquelle une pluralité de cellules de batterie (100) entourées chacune par le couvercle de cellule (300) sont empilées ;
une paire de plaques latérales (420) situées aux deux extrémités de l'unité de cellule pour supporter l'unité de cellule ; et
une paire de couvercles d'extrémité intégrés (430) situés dans une direction croisant la paire de plaques latérales et configurés pour supporter l'unité de cellule et recouvrir intégralement des portions de bornes de la pluralité de cellules de batterie.

12. Bloc-batterie (10) selon la revendication 11, comprenant en outre une unité de poignée (440) couplée à la paire de plaques latérales (420),
dans lequel chacune de la paire de plaques latérales comprend :
une portion de support (421) en contact avec l'unité de cellule (410) pour supporter l'unité de cellule ;
une portion de couplage de couvercle d'extrémité (422) couplée au couvercle d'extrémité intégré (430) ; et
une portion de couplage de poignée (423) couplée à l'unité de poignée.

13. Véhicule comprenant le bloc-batterie (10) selon l'une quelconque des revendications 1 à 12.
